# FASCICULE DE BREVET EUROPEEN

(11) **EP 3 412 699 B1**
(45) Date de publication et mention de la délivrance du brevet: **01.12.2021**
(21) Numéro de dépôt: 18173357.7
(22) Date de dépôt: 18.05.2018
(51) Int. Cl.: C08G 63/183, A45D 34/00, A45D 34/02, B05B 1/34, B05B 11/00

(54) **UTILISATION D'UN MATÉRIAU DANS DES PACKAGINGS COSMÉTIQUES ET SYSTÈME DE DISTRIBUTION D'UN PRODUIT SOUS PRESSION COMPRENANT AU MOINS UNE PIÈCE CONSTITUÉE DE OU COMPRENANT LEDIT MATÉRIAU**
VERWENDUNG EINES MATERIALS IN KOSMETIKVERPACKUNGEN, UND ABGABESYSTEM EINES PRODUKTS UNTER DRUCK, DAS MINDESTENS EINEN GANZEN ODER ZUMINDEST TEILWEISE AUS DIESEM MATERIAL HERGESTELLTEN BESTANDTEIL UMFASST
USE OF A MATERIAL IN COSMETIC PACKAGING AND SYSTEM FOR DISPENSING A PRESSURISED PRODUCT COMPRISING AT LEAST ONE PART CONSISTING OF OR COMPRISING SAID MATERIAL

(30) Priorité: 06.06.2017 FR 1755007
(43) Date de publication de la demande: 12.12.2018
(73) Titulaire: Albéa Services, 92230 Gennevilliers (FR)
(72) Inventeur: ELMEGUENNI, Mohamed, 80130 Friville Escarbotin (FR)
(74) Mandataire: Gevers & Orès

(56) Documents cités:
- EP-A1- 1 510 472
- EP-A1- 1 915 921
- EP-A1- 2 801 281
- WO-A1-2015/091973

## Description

L'invention concerne l'utilisation d'un matériau M dans des packagings cosmétiques, en particulier dans des systèmes de distribution de fluide.

L'invention concerne également un système de distribution d'un produit sous pression, en particulier destiné à faire partie d'un packaging cosmétique, comprenant au moins une pièce constituée de ou comprenant un matériau M.

On connaît des systèmes de distribution comprenant un corps pourvu de moyens de prélèvement d'un produit conditionné dans un flacon pour alimenter une chambre interne dudit corps. En particulier, le système de distribution peut être sous la forme d'une pompe à actionnement manuel ou d'une valve permettant de restituer sous pression un produit conditionné dans un flacon.

Des système de distribution de produits cosmétiques sont connus par exemple des documents EP1915921, WO2015091973, EP1510472 et EP2801281.

Un tel système de distribution comprend une tige sur laquelle est monté un bouton poussoir pour être actionnée réversiblement. La tige est équipée d'un clapet qui est disposé dans la chambre interne entre un état stable de fermeture d'un chemin de distribution formé au travers de ladite tige et du bouton poussoir jusqu'à un orifice de distribution, et un état contraint par actionnement de la tige dans lequel ledit chemin de distribution est en communication avec la chambre interne pour la sortie sous pression du produit.

Lors de son actionnement, la tige est soumise à des contraintes mécaniques importantes qui nécessitent l'utilisation d'un matériau dont la rigidité doit être suffisante pour éviter que, par déformation de ladite tige, le fonctionnement du système de distribution ne soit altéré. En particulier, de telles déformations peuvent conduire à une rupture de la tige ainsi qu'à une perte d'étanchéité du montage sur ladite tige du clapet et/ou du bouton poussoir, ces organes étant généralement réalisés dans un matériau plus souple que celui de la tige.

Le bouton poussoir peut présenter un logement dans lequel débouche un chemin de distribution, une buse pourvue d'un orifice de distribution étant montée dans ledit logement. Compte tenu des efforts exercés par la pression du produit dans le chemin de distribution, il est nécessaire d'assurer la tenue mécanique du montage de la buse, et de la tige dans le bouton poussoir.

Les exigences de bon comportement mécanique sont aussi valables pour d'autres éléments du système de distribution comme notamment le corps de la pompe.

Certains éléments d'un système de distribution comme la tige, le corps et la buse sont réalisés à partir d'un polymère de la famille des polyacétals, notamment en polyoxyméthylène (POM), également connu sous le nom d'acétal. En effet, l'utilisation de ce type de matériau est satisfaisante notamment au niveau de ses propriétés mécaniques et chimiques, de glissement, de stabilité dimensionnelle, de faible reprise d'humidité.

Toutefois, le POM est désormais reconnu comme pouvant présenter des risques toxicologiques, principalement en raison des dégagements de formaldéhyde lors de son injection à chaud dans les moules de fabrication, ainsi que lors de la destruction des systèmes de distribution en fin de vie.

Par ailleurs, diverses directives visent à règlementer, maîtriser et limiter la présence de substances potentiellement dangereuses pour la santé humaine dans les produits notamment cosmétiques, ce qui pousse les cosméticiens à limiter, voire supprimer de leurs formules les conservateurs qui sont souvent cause d'allergies ou d'intolérances.

Les produits cosmétiques deviennent donc de plus en plus fragiles, étant facilement contaminables par les bactéries et les champignons et supportant difficilement notamment le contact de l'air qui peut provoquer par exemple un dessèchement ou une oxydation du produit.

Dans certains systèmes de distribution, le corps de pompe lui-même peut participer à l'étanchéité. Or, le POM présente une porosité qui s'avère trop importante pour pouvoir contribuer à la bonne conservation du produit avant sa distribution. En effet, l'air peut diffuser au travers du POM en quantité suffisante pour pouvoir contaminer et/ou oxyder le produit contenu dans la tige entre deux distributions, ledit produit pouvant également se dessécher par évaporation au travers de ladite tige en POM.

Ainsi, un corps de pompe en POM ne présente pas une étanchéité satisfaisante.

En outre, en relation avec les évolutions réglementaires et de formulation des produits à distribuer, les industries pharmaceutique et cosmétique peuvent être amenées à stériliser leurs systèmes de distribution pour éviter toute contamination du produit préalablement à sa première distribution. En particulier, un moyen rapide et efficace pour stériliser un système de distribution d'un produit est de l'exposer à une irradiation gamma ou beta, en ce qu'il permet notamment la stérilisation de volumes fermés.

Toutefois, l'irradiation tend à modifier les propriétés du POM, notamment en le fragilisant mécaniquement et en le faisant changer d'apparence. Ainsi, les systèmes de distribution dont certains éléments comme la tige, le corps ou la buse sont réalisés à base de POM doivent être stérilisés sous gaz, en particulier sous oxyde d'éthylène, ce procédé s'avérant moins efficace et plus complexe à mettre en œuvre industriellement que l'irradiation classique sous rayon gamma ou beta.

L'utilisation du POM comme matériau de packaging cosmétique présente donc une série d'inconvénients, notamment en ce qui concerne le relargage de produit toxique. Il existe donc un besoin d'utiliser un matériau ne présentant pas les inconvénients du POM, ceci tout en conservant ses propriétés mécaniques et chimiques afin de limiter les changements d'outils industriels, en particulier de moules.

L'invention vise à résoudre ces problèmes techniques en proposant l'utilisation d'un matériau M dans les packagings cosmétiques, en particulier pour réaliser tout ou partie d'un système de distribution de fluide, ledit matériau M ayant des propriétés mécaniques et chimiques proches de celles du POM mais ne relarguant pas de produit toxiques.

L'invention concerne l'utilisation d'un matériau M dans des packagings cosmétiques, en particulier dans des systèmes de distribution de fluide destinés à faire partie de packaging cosmétique, le matériau M comprenant ou étant constitué d'une polycétone (POK) telle que définie dans les revendications 1 et 4.

Le matériau M répond aux exigences physico chimiques du domaine du packaging cosmétique. En particulier, le matériau M ne relargue pas de produit de dégradation toxique.

L'invention comprend les caractéristiques suivantes
- la polycétone est une polycétone aliphatique,
- la polycétone présente des motifs de répétition de formule I suivante :

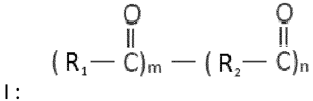

Dans laquelle m et n est un entier supérieur ou égal à 1,
- R1 est un groupement éthylène et R2 est un groupement propylène, ratio n/m étant inférieur ou égal à 1/2.

En outre, l'invention peut comprendre l'une quelconque des caractéristiques suivantes prises individuellement ou selon l'une quelconque des combinaisons techniquement possibles:
- le ratio n/m est inférieur ou égal à 1/4,
- le matériau M respecte les exigences règlementaires pour le secteur de la cosmétique, en particulier le matériau M ne relargue pas de substance dangereuse cancérogène suite à sa dégradation,
- les propriétés mécaniques du matériau M ne sont pas altérées par des irradiations Beta et Gamma jusqu'à au moins 15 kGy,
- les propriétés mécaniques du matériau M ne sont pas altérées par des irradiations Beta et Gamma jusqu'à au moins 250 kGy,
- le matériau M présente une stabilité thermique jusqu'à au moins 200 °C,
- le matériau M présente un retrait supérieur ou égal à 1,5% et inférieur ou égal à 2,5%.

L'invention vise également à perfectionner l'art antérieur en proposant notamment un système de distribution d'un produit sous pression, en particulier destiné à faire partie d'un packaging cosmétique, ledit système comprenant au moins une pièce constituée de ou comprenant un matériau M, le matériau M comprenant ou étant constitué d'une polycétone (POK).

L'invention peut comprendre l'une quelconque des caractéristiques suivantes prises individuellement ou selon l'une quelconque des combinaisons techniquement possibles :
- le système de distribution comprend une pompe réalisée à base du matériau M, notamment sous l'une des formes définies plus haut,
- ladite pompe comprend un corps,
- ledit système comprend également une tige et un bouton poussoir, monté sur ladite tige, pour actionner réversiblement ladite tige, notamment en translation, dans ledit corps,
- le corps de la pompe est réalisé à base du matériau M,
- ledit corps est équipé de moyens permettant l'alimentation d'une chambre interne dudit corps en produit provenant d'une source,
- ladite tige est équipée d'un clapet qui est disposé dans la chambre interne en présentant un état stable de fermeture d'un chemin de distribution formé au travers de la tige et du bouton poussoir jusqu'à un orifice de distribution, et un état contraint par actionnement de la tige dans lequel ledit chemin de distribution est en communication avec la chambre interne,
- la tige est réalisée à base du matériau M,
- le bouton poussoir présente un logement dans lequel est montée une buse pourvue de l'orifice de distribution,
- la buse est réalisée à base du matériau M,
- un ressort de rappel en état stable de la tige après son actionnement sur une course de distribution est réalisé à base du matériau M.

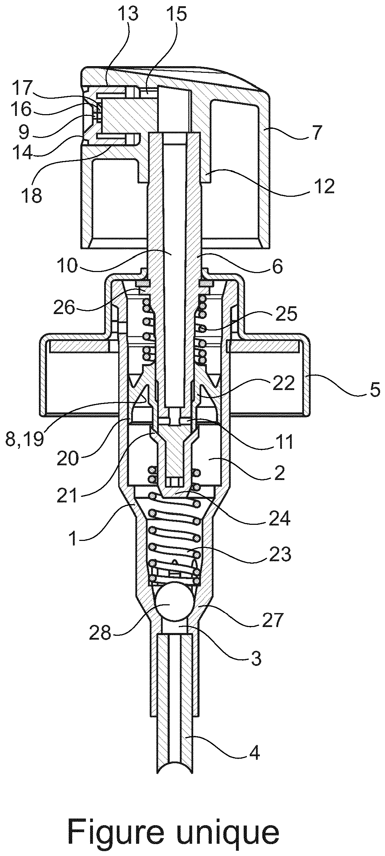

La présente invention sera mieux comprise à la lumière de la description suivante qui n'est donnée qu'à titre indicatif et qui n'a pas pour but de limiter ladite invention, accompagnée de la figure 1 représentant en coupe longitudinale un exemple de système de distribution d'un produit sous pression.

Afin de remplacer le POM dans certains packagings cosmétiques, de très nombreux matériaux ont été testés par la demanderesse. En particulier, des tests ont étés effectués sur ces différents matériaux afin de déterminer si leur propriétés mécaniques et chimiques sont proches de celles du POM. Des tests d'utilisation de ces matériaux pour la fabrication de certaines pièces destinées au packaging cosmétique ont également été effectués. Parmi ceux-ci, les matériaux de la famille des polycétones (POK) ont permis d'obtenir de très bons résultats.

Les POK possèdent des propriétés mécaniques et chimiques s'approchant de celles du POM, grâce à quoi l'utilisation de ces nouveaux matériaux n'impliquera pas de modification trop importante du process de fabrication des pièces anciennement en POM.

Les polycétones sont une famille de polymères thermoplastiques de hautes performances.

On distingue les polycétones aliphatiques des polycétones aromatiques. On peut citer comme exemple de polycétone aromatique la polyétheréthercétone (PEEK).

Les polycétones présentes de bonnes propriétés mécaniques et présentent une bonne résistance aux solvants.

La demanderesse a réalisé des tests de résistances mécaniques sur une pluralité de polycétones. On définit en particulier un sous ensemble de polycétones présentant des motifs de répétition de formule I suivante :

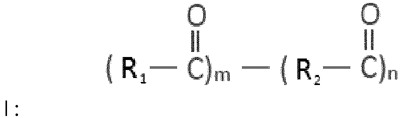

Dans laquelle m et n est un entier supérieur ou égal à 1,
R1 et R2, identiques ou différents, représentent chacun indépendamment un groupe alkylène, éventuellement substitué par :
   un groupe alkyle, un groupe alcyne, un groupe hydroxyle, un groupe amine, un groupe amide, un atome d'halogène, un groupe carboxyle,
l'enchainement des motifs de répétition pouvant être aléatoire ou séquencé.

Un POK selon cette définition est donc un polymère constitué d'une pluralité de motifs de répétition tels que définis ci-dessus. Un premier motif de répétition comprend le groupement R1 et un groupe carbonyle. Ce premier motif est répété m fois dans le polymère. Un deuxième motif de répétition comprend le groupement R2 et un groupe carbonyle. Ce deuxième motif est répété n fois dans le polymère. L'enchaînement des motifs de répétition peut être aléatoire ou séquencé. Lorsque les motifs de répétition s'enchainent de manière aléatoire le polymère est qualifié de polymère statistique. Lorsque les motifs de répétition s'enchainent de manière séquencée le polymère est qualifié de polymère à blocs.

Un exemple de POK peut être représenté par les formules ci-dessous :

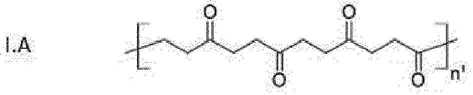

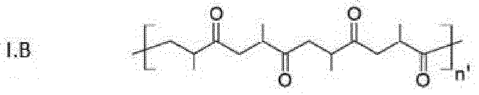

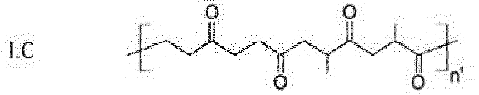

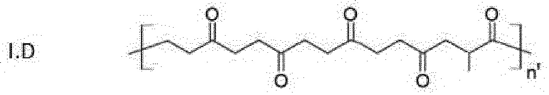

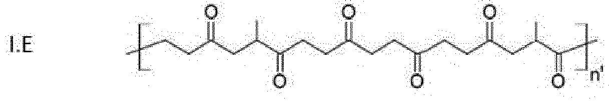

Ces exemples de POK sont donnés à titre indicatif.

Selon une autre définition possible, la polycétone est définie par la formule A suivante :

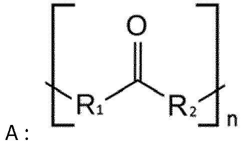

Dans laquelle n est un entier supérieur à 1,
R1 et R2, identiques ou différents, représentent chacun indépendamment un groupe alkylène, éventuellement substitué par :
un groupe alkyle, un groupe alcyne, un groupe aryle, un groupe hydroxyle, un groupe amine, un groupe amide, un atome d'halogène, un groupe carboxyle.

L'allongement et le module d'élasticité de Young du POK contribuent à une résistance exceptionnelle à la fatigue cyclique, en traction et en flexion. Ce matériau résiste également mieux au vieillissement et au fluage que le POM.

Le POK présente également une bonne résistance à la stérilisation par rayons beta et gamma, ses propriétés n'étant pas détériorées jusqu'à environs 300 kGy.

Le POK répond aux exigences règlementaires pour le secteur de la cosmétique et ne relargue pas de formaldéhyde ni aucun produit de dégradation considéré comme substance dangereuse et/ou cancérogène.

De plus, le POK présente un retrait similaire à celui du POM. Ainsi, le POK peut être utilisé pour la fabrication de pièces destinées au packaging cosmétique en utilisant le même process de fabrication et le même outillage que ceux utilisés pour le POM.

Le POK et le POM sont utilisables avec le même process, la même température d'injection (par exemple 225-230°) et la même température de moule (par exemple 80°C). L'un et l'autre présentent un retrait similaire et ne présentent pas de problème de démoulage. En particulier, pour le POK pas plus que pour le POM, il n'existe de problème de réticulation du polymère qui conduirait à une prise au piège dans le moule.

Les polycétones (POK) semblent donc être les matériaux les plus adaptés pour une utilisation dans des packagings cosmétiques, en particulier à l'aide d'une ligne de fabrication précédemment utilisée avec du POM.

L'exemple I.A correspond à un POK de formule I dans lequel R1 et R2 sont des groupements éthylène. Un tel POK est très cristallin, ce qui risque de rendre le matériau M cassant lorsque soumis à des contraintes mécaniques trop importantes.

L'exemple I.B correspond à un POK de formule I dans lequel R1 et R2 sont des groupements propylène.

Selon l'invention, le matériau M est un POK de formule I dans laquelle R1 est un groupement éthylène et R2 est un groupement propylène. Ainsi, un premier motif de répétition du polymère comprend un groupement éthylène et un deuxième motif de répétition comprend un groupement propylène. La présence d'un groupement propylène permet de modifier les propriétés rhéologique et mécanique du matériau. Les exemples I.C et I.D correspondent à de tels POK.

Par ailleurs, les polycétones représentées aux exemples I.C et I.D correspondent à des polymères à blocs dans la mesure où les premiers motifs de répétition et les deuxièmes motifs de répétition sont ordonnés. On constate en effet que les premiers motifs de répétition forment un premier bloc et que les deuxièmes motifs de répétition forment un deuxième bloc. Au contraire, la polycétone représentée à l'exemple I.E correspond à un polymère statistique dans la mesure où les motifs de répétition sont répartis de manière aléatoire.

Selon l'invention, pour un POK de formule I dans laquelle R1 est un groupement éthylène et R2 est un groupement propylène, le ratio n/m est inférieur ou égal à 1/2. Ainsi, pour un groupement propylène, le polymère comprend deux groupements éthylène.

Avantageusement encore, pour un POK de formule I dans laquelle R1 est un groupement éthylène et R2 est un groupement propylène, le ratio n/m est inférieur ou égal à 1/4. Ainsi, pour un groupement propylène, le polymère comprend quatre groupements éthylène. L'exemple I.D correspond à un tel POK. Pour un POK de formule I dans laquelle R1 est un groupement éthylène et R2 est un groupement propylène, le ratio n/m pourra également être inférieur ou égal à 1/8, voire 1/16.

La présence d'une faible proportion de propylène permet d'influencer la cristallisation du produit et d'améliorer les propriétés mécaniques de la polycétone en la rendant plus résistante. Le POK identifié comme particulièrement avantageux au regard des résultats visés est commercialisé par AKRO-PLASTIC sous le nom de « AKROTEK^{®}PK».

Selon une autre définition encore possible, le matériau M de formule I comprend ou est constitué, avantageusement, d'une polycétone formé d'un terpolymère monoxyde de carbone/éthylène/propène.

De façon préférentielle, quel que soit la nature du matériau M utilisé dans des packagings cosmétiques, en particulier dans des systèmes de distribution de fluide destinés à faire partie de packaging cosmétique, ledit matériau M sélectionné selon l'invention ne relargue pas de substance dangereuse cancérogène suite à sa dégradation.

De manière à pouvoir subir une stérilisation par rayonnement, par exemple par rayonnement beta et/ou gamma, le matériau M est sélectionné de manière à ce que ses propriétés ne soient pas altérées par des irradiations Beta et/ou Gamma jusqu'à au moins 15 kGy.

Avantageusement, ses propriétés ne sont pas altérées par des irradiations Beta et/ou Gamma jusqu'à au moins 250 kGy.

Le matériau M présente une stabilité thermique jusqu'à au moins 200 °C, de manière à pouvoir être utilisé dans un process de fabrication existant.

Avantageusement, le matériau M présente un retrait supérieur ou égal à 1,5% et inférieur ou égal à 2,5%, de manière à pouvoir être utilisé dans un process précédemment utilisé pour le POM.

La présente invention concerne également un système de distribution d'un produit sous pression, en particulier destiné à faire partie d'un packaging cosmétique, ledit système comprenant au moins une pièce constituée de ou comprenant un matériau M défini précédemment.

En particulier, ledit système de distribution peut comprendre une pompe réalisée à base du matériau M. Le matériau est une polycétone (POK) aliphatique présentant des motifs de répétition de formule I suivante:

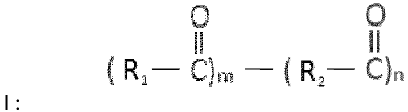

Dans laquelle m et n est un entier supérieur ou égal à 1, R1est un groupement éthylène et R2 est un groupement propylène, le ratio n/m étant inférieur ou égal à 1/2.

Encore avantageusement, pour un POK de formule I dans lequel R1 est un groupement éthylène et R2 est un groupement propylène, le ratio n/m est inférieur ou égal à 1/4.

On décrit ci-dessous, en référence à la figure 1, un système de distribution à actionnement manuel pour permettre la distribution d'un produit sous pression, par exemple sous la forme d'un spray, d'une noisette ou d'un flot continu selon la nature dudit produit. Dans un exemple d'application, le produit est sous la forme d'un liquide, d'une lotion, d'un gel ou d'une crème, pour un usage cosmétique, de parfumerie ou pour des traitements pharmaceutiques.

Ce système n'est donné qu'à titre d'exemple et tout système de distribution d'un produit sous pression connu de l'homme de l'art peut convenir pour l'application de la présente invention.

Le système de distribution de la figure 1 comprend une pompe de distribution agencée pour restituer un produit liquide sous forme de spray. Toutefois, l'invention n'est pas limitée à un type de système de distribution particulier, ni à une forme de distribution particulière.

Les pompes, réalisées en matières poreuses du type POM, sont des barrières médiocres à l'évaporation des constituants des formules, notamment des parfums. Les constituants les plus volatiles, c'est-à-dire les aromes, ou bien la fragrance des parfums, s'échappent en premier à travers les porosités de matières.

La pompe selon l'invention peut être réalisée en tout ou partie à partir du matériau M. Le matériau M est une polycétone (POK) telle que décrite plus haut.

Le POK présente une très bonne barrière grâce à sa faible porosité. La durée de conservation des parfums et cosmétiques dans une pompe réalisée à partir de POK s'en trouve donc améliorée.

La pompe comprend un corps 1 dans lequel est formée une chambre interne 2 qui est alimentée en produit provenant d'une source, ledit corps étant équipé de moyens permettant l'alimentation de ladite chambre interne. Pour ce faire, le corps 1 présente un orifice d'alimentation 3, par exemple équipé d'un tube plongeur 4, qui est destiné à être en communication avec l'intérieur d'un flacon de conditionnement du produit en vue de son prélèvement.

Le corps 1 de la pompe peut également être réalisé à base du matériau M. Le corps 1 peut être réalisé à base de polycétone (POK), en particulier un POK tel que décrit plus haut.

Le corps 1 peut être équipé d'une frette périphérique 5 permettant le montage étanche dudit corps dans le col d'un flacon en mettant l'orifice d'alimentation 3 en communication avec le produit conditionné dans ledit flacon. Selon le mode de réalisation représenté, la frette 5 est déformable, par exemple en étant réalisée en aluminium, pour assurer son sertissage étanche autour du col. Toutefois, l'invention n'est pas limitée à un mode de réalisation particulier du montage du système de distribution sur le flacon, pouvant être notamment réalisé par vissage, soudage ou encliquetage étanche.

Le système de distribution comprend une tige 6 d'amenée du produit sous pression qui est disposée dans le corps 1 en étant actionnable réversiblement en translation sur une course respectivement de distribution et d'aspiration dudit produit par l'intermédiaire d'un bouton poussoir 7 qui est monté sur ladite tige.

La tige 6 est équipée d'un clapet d'échappement 8 qui est disposé dans la chambre interne 2 en présentant un état stable de fermeture d'un chemin de distribution formé au travers de la tige 6 et du bouton poussoir 7 jusqu'à un orifice de distribution 9, et un état contraint par actionnement de ladite tige dans lequel ledit chemin de distribution est en communication avec ladite chambre interne.

Ainsi, la distribution du produit est réalisée par appui digital sur le bouton poussoir 7 pour le déplacer axialement en actionnant la translation de la tige 6 afin d'acheminer le produit de la chambre interne 2 vers l'orifice de distribution 9 par lequel ledit produit sort.

Compte tenu des différentes contraintes qu'elle a à subir dans le cadre de son utilisation, la tige 6 est réalisée à base d'un matériau dont la rigidité est suffisante pour éviter que, par déformation de ladite tige, le fonctionnement du système de distribution ne soit altéré. En outre, le matériau de la tige 6 doit présenter des propriétés de glissement et de résistance à l'usure et au fluage satisfaisantes. Pour ce faire, le matériau de la tige 6 comprend au moins un matériau M.

Le matériau M est une polycétone (POK) telle que décrite plus haut.

L'utilisation d'un matériau M permet également de contribuer à une bonne conservation du produit à distribuer. En effet, la porosité de ce matériau s'avère suffisamment faible pour empêcher l'air et l'eau de diffuser au travers de la tige 6, limitant ainsi la contamination, le dessèchement et/ou l'oxydation du produit contenu dans ladite tige entre deux distributions. Par ailleurs, le matériau M conserve ses propriétés, notamment mécaniques et d'apparence, sous irradiation par rayon gamma ou beta, ce qui permet d'envisager une stérilisation rapide et efficace du système de distribution.

Par conséquent, un flacon selon l'invention est particulièrement avantageux pour distribuer un produit dont la teneur en conservateurs est limitée voire nulle et/ou devant être stérilisé.

En outre, l'utilisation d'un matériau M permet de limiter les risques toxicologiques, notamment en ce qu'il n'est pas susceptible de dégager de composant toxique lors de son chauffage ou de sa destruction en fin de vie. Par ailleurs, la tige 6 en un matériau M, peut être réalisée par moulage, à partir d'outillages et d'étapes d'injection classiquement utilisés pour les organes d'un système de distribution utilisant du POM.

Le chemin de distribution passe par un canal interne 10 formé dans la tige 6, ledit canal étant en communication avec deux orifices amont radiaux 11 et débouchant dans l'extrémité supérieure de ladite tige. Le bouton poussoir 7 présente un puits 12 qui est monté autour de l'extrémité supérieure de la tige 6 afin de faire passer le chemin de distribution par le canal interne 10 et ledit puits.

Le bouton poussoir 7 présente un logement 13 dans lequel débouche le chemin de distribution, une buse 14 pourvue de l'orifice de distribution 9 étant montée dans ledit logement. La buse 14 est en communication avec le puits de montage 12 par l'intermédiaire d'un canal 15 prévu dans le bouton poussoir 7, le chemin de distribution passant par ledit canal.

Selon le mode de réalisation représenté, le chemin de distribution débouche dans une chambre tourbillonnaire 16 qui est formée entre la buse 14 et une portée 17 du logement 13, ladite chambre tourbillonnaire étant pourvue de l'orifice de distribution 9. Cette réalisation permet de faire tourner très rapidement le produit liquide dans la chambre tourbillonnaire 16 pour restituer ledit produit sous forme de spray au travers de l'orifice de distribution 9. En variante, notamment dans le cas d'un produit plus visqueux, la buse 14 peut être sous la forme d'un tube de prolongement.

Compte tenu des efforts exercés par la pression du produit dans le chemin de distribution, notamment de l'ordre de 5 à 7 bars, il est nécessaire d'assurer la tenue mécanique du montage de la buse 14 et de la tige 6 dans le bouton poussoir 7. Pour ce faire, les montages sont réalisés par emmanchement, la buse 14 étant en outre équipée d'une saillie radiale 18 formant moyen d'harponnage dans le logement 13.

Les buses doivent présenter une très bonne tenue dans les corps de boutons poussoirs afin de ne pas être catapultées sous la pression de sortie lors de l'utilisation de la pompe par un consommateur. Pour cela, elles sont traditionnellement réalisées en POM puis harponnée dans la matière plus tendre du corps du bouton poussoir, comme par exemple une polyoléfine, afin de vérifier la pression d'épreuve de 30 bars.

Cependant, lors de la mise en place de la buse dans le logement du corps de pompe, les harpons sont rabotés ou au moins émoussés, et la tenue de la buse s'en trouve diminuée. Avec le POK, le profil des harpons reste identique et la tenue est alors bien meilleure.

Pour éviter le risque d'expulsion de la buse 14 lors de la distribution, ladite buse peut donc être réalisée à base d'un matériau M. Le matériau M est une polycétone (POK) telle que décrite plus haut.

En outre, au moins la partie du bouton formant le logement 13 peut être réalisé en polyoléfine pour présenter une souplesse favorisant un bon harponnage de la saillie rigide 18.

Par ailleurs, au moins la partie du bouton formant le puits 12 peut être réalisé en polyoléfine non chargée en COC (copolymère d'oléfine cyclique) pour présenter une rigidité inférieure à celle de la tige 6 afin de favoriser la tenue mécanique et l'étanchéité du montage entre le bouton poussoir 7 et ladite tige.

Dans le mode de réalisation représenté à la figure 1, le clapet 8 de la tige 6 comprend un piston 19 qui est monté coaxialement autour de ladite tige en présentant une portée d'étanchéité extérieure 20 qui est en appui étanche dans la chambre interne 2 pour former entre ledit piston et l'orifice d'alimentation 3 une chambre de dosage du produit. Le piston 19 présente également une portée d'étanchéité intérieure 21 qui est actionnable en déplacement par rapport à au moins un orifice amont 11 du chemin de distribution.

Le piston 19 présente un manchon 22 de montage en coulissement autour de la tige 6, ledit montage étant agencé pour permettre le déplacement réversible de la portée d'étanchéité intérieure 21 entre un état stable de fermeture et un état contraint d'ouverture de la communication du chemin de distribution avec la chambre interne 2. En variante non représentée, l'actionnement de la portée d'étanchéité intérieure 21 entre ses deux états peut être réalisé par déformation du piston 19.

Le piston 19 peut être réalisé dans un matériau plus souple que celui de la tige 6 et du corps 1 afin d'assurer l'étanchéité de la chambre interne 2 au niveau des portées d'étanchéité extérieure 20 et intérieure 21, tout en pouvant bénéficier d'un faible coefficient de frottement entre ladite tige et ledit piston.

La pompe comprend un ressort 23 qui est disposé dans la chambre interne 2, entre la tige 6 et le corps 1, pour rappeler ladite tige en état stable après son actionnement sur sa course de distribution. En particulier, la tige 6 est équipée d'une butée basse 24 rapportée sur laquelle le ressort 23 est en appui.

Une tendance demande des pompes entièrement réalisées en matières thermoplastiques. Or, les pompes comprennent un ressort de rappel dont la force peut être égale à environ 2 kg. Pour réaliser un tel ressort, il est nécessaire d'utiliser un ressort hélicoïdal constitué en général de fil d'acier. Jusqu'alors, aucune matière plastique ne pouvait réaliser les performances d'un ressort en acier.

Cependant, le matériau M possède des propriétés mécaniques et chimiques lui permettant d'être utilisé pour réaliser un tel ressort cylindrique. Ainsi, ledit ressort 23 peut être réalisé à base d'un matériau M. Le matériau M est une polycétone (POK) telle que décrite plus haut.

Une telle polycétone permet de réaliser des ressorts cylindriques de performances identiques à ceux réalisés en fil métallique, parfaitement compatible avec les formules de parfums et de cosmétique, et parfaitement propres, ce qui n'est pas le cas des ressorts métalliques qui ne peuvent jamais être complètement lavés des huiles de tréfilage.

En outre, le coulissement du piston 19 est contraint par un ressort de pré-compression 25 qui est monté en appui entre le manchon 22 et une saillie radiale 26 de la tige 6, ledit ressort de pré-compression exerçant un effort de plaquage de la portée d'étanchéité intérieure 21 contre la butée basse 24 afin d'assurer la fermeture étanche des orifices amont 11 entre deux distributions.

Pour présenter une résistance au fluage et aux contraintes mécaniques suffisantes, la butée basse 24 peut être réalisée dans un matériau M analogue à celui de la tige 6, c'est-à-dire à base d'un matériau M.

Par ailleurs, l'orifice d'alimentation 3 est surmonté d'un siège 27 par rapport auquel un clapet d'admission sous la forme d'une bille 28 est déplaçable réversiblement entre un état d'ouverture dudit siège pour permettre l'alimentation de la chambre interne 2 et un état de fermeture dudit siège.

Pour permettre une étanchéité optimale en état de fermeture, le clapet d'admission et le siège 27 peuvent être réalisés dans des matériaux présentant des rigidités différentes. Par exemple, le siège 27 peut être plus souple que le clapet d'admission.

A titre alternatif, deux autre types de matériaux ont étés sélectionnés par la demanderesse pour leur propriétés mécaniques et chimiques : le polytéréphtalate de butylène (PBT) et les polyamides (PA).

Un polyamide (PA) est un polymère contenant des fonctions amide -C(=O)-NH- pouvant résulter de la polycondensation entre les fonctions acide carboxylique et amine.

Les polyamides possèdent des propriétés assez proches du POM pour être utilisé en tant que matériau de packaging cosmétique. De nombreux polyamides différents peuvent être utilisés dans des packagings cosmétiques. On peut notamment citer le PA46, le PA4T et le PA410 qui sont particulièrement avantageux pour cette utilisation.

Cependant, les polyamides sont difficilement utilisables dans un moule chaud car ils risquent de réticuler à l'intérieur du moule et donc d'être difficiles à démouler. Les polyamides testés nécessitent donc certains aménagements du process de fabrication des pièces destinées au packaging cosmétique.

Un autre matériau testé par la demanderesse est le polytéréphtalate de butylène (PBT). Le PBT peut être définie selon la formule suivante :

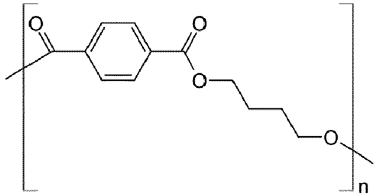

Le PBT possède des caractéristiques mécaniques équivalentes à celles du POM, notamment en termes de résistance mécanique.

Le PBT possède également des propriétés chimiques équivalentes au POM. Le PBT est notamment utilisable comme matériau de packaging cosmétique en raison de sa compatibilité chimique avec de l'alcool, composé très fréquent en fragrance et lotion.

Le PBT présente également une bonne résistance à la stérilisation par rayons beta et gamma. En effet, le POM devient cassant à environs 15 kGy alors que le PBT résiste à la stérilisation jusqu'à environs 50 kGy.

A la différence du POM, le PBT ne relargue pas de formaldéhyde ni aucun produit de dégradation considéré comme substance dangereuse et/ou cancérogène.

Néanmoins, l'utilisation du PBT dans des packagings cosmétiques présente certaines contraintes notamment en termes de compatibilité avec l'outillage utilisé actuellement pour le POM. En effet, le PBT présente un retrait différent de celui du POM. Le retrait (retrait plastique) est la faculté d'un corps à retrouver son état normal après une élévation de température et/ou une déformation plastique. Un faible retrait est requis pour l'obtention de pièces de haute précision dimensionnelle, à tolérance serrée.

Les pièces à base de POM et de PBT obtenues après démoulage n'ont donc pas les mêmes dimensions en raison des différents retraits de matière. De plus, le PBT et le POM ne réagissent pas de la même manière en température, il est donc également nécessaire d'aménager le process en termes de cycles thermiques.

L'invention a été décrite ci-dessus avec l'aide de modes de réalisation sans limitation du concept inventif général.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

## Revendications

1. Utilisation d'un matériau M dans des packagings cosmétiques, en particulier dans des systèmes de distribution de fluide destinés à faire partie de packaging cosmétique, le matériau M comprenant ou étant constitué d'une polycétone (POK), ladite polycétone étant une polycétone aliphatique, dans laquelle la polycétone présente des motifs de répétition de formule I suivante : 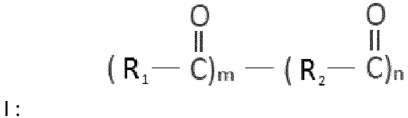 Dans laquelle m et n est un entier supérieur ou égal à 1,
R1 est un groupement éthylène et R2 est un groupement propylène,
l'enchainement des motifs de répétition pouvant être aléatoire ou séquencé,
le ratio n/m étant inférieur ou égal à 1/2.

2. Utilisation selon la revendication 1, dans laquelle le ratio n/m est inférieur ou égal à 1/4.

3. Utilisation selon la revendication précédente, dans laquelle le matériau M présente un retrait supérieur ou égal à 1,5% et inférieur ou égal à 2,5%.

4. Système de distribution d'un produit sous pression, en particulier destiné à faire partie d'un packaging cosmétique, ledit système comprenant au moins une pièce constituée de ou comprenant un matériau M, le matériau M comprenant ou étant constitué d'une polycétone (POK), ladite polycétone étant une polycétone aliphatique,
dans laquelle la polycétone présente des motifs de répétition de formule I suivante : 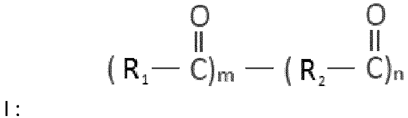 Dans laquelle m et n est un entier supérieur ou égal à 1,
R1 est un groupement éthylène et R2 est un groupement propylène,
l'enchainement des motifs de répétition pouvant être aléatoire ou séquencé,
le ratio n/m étant inférieur ou égal à 1/2.

5. Système de distribution selon la revendication 4, comprenant une pompe réalisée à base du matériau M.

6. Système de distribution d'un produit sous pression selon la revendication 5, dans lequel ladite pompe comprend un corps (1), ledit système comprenant également une tige (6) et un bouton poussoir (7), monté sur ladite tige (6), pour actionner réversiblement ladite tige (6) dans ledit corps.

7. Système de distribution d'un produit sous pression selon la revendication 6, dans lequel le corps (1) de la pompe est réalisé à base du matériau M.

8. Système de distribution selon la revendication 7, dans lequel la tige (6) est réalisée à base du matériau M.

9. Système de distribution selon l'une quelconque des revendications 6 à 8, dans lequel le bouton poussoir (7) présente un logement (13) dans lequel est montée une buse (14) pourvue d'un orifice de distribution (9), ladite buse étant réalisée à base du matériau M.

10. Système de distribution selon l'une quelconque des revendications 6 à 9, dans lequel un ressort (23) de rappel en état stable de la tige (6) après son actionnement sur une course de distribution est réalisé à base du matériau M.

## Patentansprüche

1. Verwendung eines Materials M in kosmetischen Verpackungen, insbesondere in Abgabesystemen für Flüssigkeiten, die dazu bestimmt sind, einen Teil von kosmetischen Verpackungen zu bilden, wobei das Material M ein Polyketon (PK) umfasst oder daraus besteht, wobei das besagte Polyketon ein aliphatisches Polyketon ist, wobei das Polyketon Repetiereinheiten der folgenden Formel I aufweist: 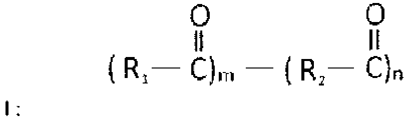 wobei m und n ganze Zahlen größer oder gleich 1 sind,
R1 eine Ethylengruppe und R2 eine Propylengruppe ist,
die Folge von Repetiereinheiten zufällig oder sequenziell sein kann,
das Verhältnis n/m kleiner oder gleich 1/2 ist.

2. Verwendung nach Anspruch 1, wobei das Verhältnis n/m kleiner oder gleich 1/4 ist.

3. Verwendung nach dem vorstehenden Anspruch, wobei das Material M eine Schrumpfung größer oder gleich 1,5 % und kleiner oder gleich 2,5 % aufweist.

4. System zur Abgabe eines Produkts unter Druck, das insbesondere zur Bildung eines Teils einer kosmetischen Verpackung bestimmt ist, wobei das besagte System zumindest ein Teil umfasst, das aus einem Material M besteht oder ein solches umfasst, wobei das Material M ein Polyketon (PK) umfasst oder aus einem solchen besteht, wobei das besagte Polyketon ein aliphatisches Polyketon ist, wobei das Polyketon Repetiereinheiten der folgenden Formel I aufweist: 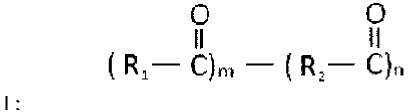 wobei m und n ganze Zahlen größer oder gleich 1 sind,
R1 eine Ethylengruppe und R2 eine Propylengruppe ist,
die Folge von Repetiereinheiten zufällig oder sequenziell sein kann,
das Verhältnis n/m kleiner oder gleich 1/2 ist.

5. Abgabesystem nach Anspruch 4, das eine Pumpe umfasst, die auf Basis des Materials M hergestellt ist.

6. Abgabesystem für ein Produkt unter Druck nach Anspruch 5, wobei die besagte Pumpe einen Körper (1) umfasst, wobei das besagte System auch eine Stange (6) und einen Druckknopf (7) umfasst, der an der besagten Stange (6) angebracht ist, um die besagte Stange (6) in dem Körper reversibel zu betätigen.

7. Abgabesystem für ein Produkt unter Druck nach Anspruch 6, wobei der Pumpenkörper (1) auf Basis des Materials M hergestellt ist.

8. Abgabesystem nach Anspruch 7, wobei der Stab (6) auf Basis des Materials M hergestellt ist.

9. Abgabesystem nach einem der Ansprüche 6 bis 8, wobei der Druckknopf (7) eine Unterbringung (13) aufweist, wobei eine mit einer Abgabeöffnung (9) versehene Düse (14) angebracht ist, wobei die besagte Düse auf Basis des Materials M hergestellt ist.

10. Abgabesystem nach einem der Ansprüche 6 bis 9, wobei eine Feder (23) zum Zurückführen der Stange (6) in einen stabilen Zustand nach ihrer Betätigung über einen Abgabeweg auf Basis eines Materials M hergestellt ist.

## Claims

1. Use of a material M in cosmetic packaging, in particular in fluid delivery systems intended to form part of cosmetic packaging, the material M comprising or consisting of a polyketone (POK), said polyketone being an aliphatic polyketone, wherein the polyketone has repeating units of the following formula I: 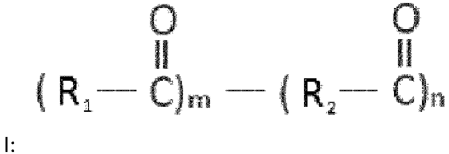 wherein m and n is an integer greater than or equal to 1,
R1 is an ethylene group and R2 is a propylene group,
the sequence of the repeating units may be random or sequenced, the ratio n/m being less than or equal to 1/2.

2. Use according to claim 1, wherein the ratio n/m is less than or equal to 1/4.

3. Use according to the preceding claim, wherein the material M has a shrinkage greater than or equal to 1.5% and less than or equal to 2.5%.

4. System for dispensing a pressurized product, in particular intended to form part of a cosmetic packaging, said system comprising at least one part consisting of or comprising a material M, the material M comprising or consisting of a polyketone (POK), said polyketone being an aliphatic polyketone,
wherein the polyketone has repeating units of the following formula I: 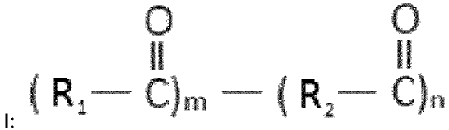 wherein m and n is an integer greater than or equal to 1,
R1 is an ethylene group and R2 is a propylene group,
the sequence of the repeating units may be random or sequenced, the ratio n/m being less than or equal to 1/2.

5. Dispensing system according to claim 4, comprising a pump made from the material M.

6. System for dispensing a pressurized product according to claim 5, wherein said pump comprises a body (1), said system also comprising a rod (6) and a push button (7), mounted on said rod (6), for reversibly actuating said rod (6) in said body.

7. System for dispensing a pressurized product according to claim 6, wherein the body (1) of the pump is made of the material M.

8. Dispensing system according to claim 7, wherein the rod (6) is made of the material M.

9. Dispensing system according to any one of claims 6 to 8, wherein the push button (7) has a housing (13) wherein a nozzle (14) provided with a dispensing orifice (9) is mounted, said nozzle being made of the material M.

10. Dispensing system according to any one of claims 6 to 9, wherein a spring (23) for returning the rod (6) to a stable state after it has been actuated over a dispensing stroke is made from the material M.
